# EUROPÄISCHE PATENTSCHRIFT

(11) **EP 3 596 093 B1**
(45) Veröffentlichungstag und Bekanntmachung des Hinweises auf die Patenterteilung: **15.07.2020**
(21) Anmeldenummer: 17780425.9
(22) Anmeldetag: 06.10.2017
(51) Int. Cl.: C07F 17/00, C07F 7/08, C07F 7/10

(54) **HERSTELLUNG VON SILOXANEN IN GEGENWART VON KATIONISCHEN SILICIUM(II)-VERBINDUNGEN**
PREPARATION OF SILOXANES IN THE PRESENCE OF CATIONIC SILICON (II) COMPOUNDS
PRÉPARATION DE SILOXANES EN PRÉSENCE DE COMPOSÉS SILICIUM(II) CATIONIQUES

(43) Veröffentlichungstag der Anmeldung: 22.01.2020
(73) Patentinhaber: Wacker Chemie AG, 81737 München (DE)
(72) Erfinder: FRITZ-LANGHALS, Elke, 85521 Ottobrunn (DE); WEIDNER, Richard, 84489 Burghausen (DE)
(74) Vertreter: Mai, Marit
(86) Internationale Anmeldenummer: PCT/EP2017/075565
(87) Internationale Veröffentlichungsnummer: WO 2019/068357

(56) Entgegenhaltungen:
- WO-A1-2013/142956
- DE-A1-102016 205 526
- PETER JUTZI: "The Pentamethylcyclopentadienylsilicon(II) Cation: Synthesis, Characterization, and Reactivity", CHEMISTRY - A EUROPEAN JOURNAL, Bd. 20, Nr. 30, 1. Juli 2014 (2014-07-01), Seiten 9192-9207, XP55333466, DE ISSN: 0947-6539, DOI: 10.1002/chem.201402163
- Kinga Leszczy ET AL: "Silicon(II) Compounds The Pentamethylcyclopentadienylsilicon(II) Cation as a Catalyst for the Specific Degradation of Oligo(ethyleneglycol) Diethers**", Angew. Chem. Int. Ed., 1. Januar 2011 (2011-01-01), Seiten 6843-6846, XP55360214, Gefunden im Internet: URL:http://onlinelibrary.wiley.com/store/1 0.1002/anie.201101139/asset/6843_ftp.pdf?v =1&t=j0vy6y0z&s=77ebeeef0d3e0a92ed27ef48df 27bf8c32f87d45 [gefunden am 2017-03-30]

## Beschreibung

Die Erfindung betrifft ein Verfahren zur Herstellung von Siloxanen aus Mischungen von Organosiliciumverbindungen, die eine Silicium-Wasserstoff-Gruppierung aufweisen und Organosiliciumverbindungen, die eine Alkoxygruppierung aufweisen in Gegenwart einer kationischen Silicium(II)-Verbindung und die Mischungen.

Es sind verschiedene Verfahren zur Herstellung von Siloxangruppierungen bekannt. Ein gängiges Verfahren ist beispielsweise die Kondensation von Silanolgruppierungen unter Wasserabspaltung gemäß der Reaktionsgleichung Si-OH + HO-Si => Si-O-Si + H₂O. Dieser Syntheseweg führt jedoch bei Einsatz zweier verschiedener Silanole zu einem Gemisch aus Hetero- und Homokondensationsprodukten. Ein einheitliches Produkt kann in diesem Fall prinzipiell nicht hergestellt werden. Ein weiterer Nachteil hierbei ist, dass das gebildete Wasser weitere Siloxangruppierungen angreifen kann und damit zu Äquilibrierungen führt.

In der Literatur wurden verschiedene alternative Verfahren vorgeschlagen, mit denen eine selektive Verknüpfung prinzipiell möglich ist. Ein Beispiel ist die Edelmetall-katalysierte Dehydrokondensation von Si-H haltigen Silanen oder Siloxanen und Silanolen (Si-H + HO-Si => Si-O-Si + H₂). Von Nachteil ist hierbei die begrenzte Stabilität und technische Verfügbarkeit von Silanolen und die Verwendung von teuren Edelmetallkatalysatoren.

Einen weiteren Ansatz beschreiben Rubinsztajn und Cella in US 2004/012668, indem sie SiH-haltige Silane oder Siloxane mit Alkoxysilanen unter Abspaltung eines Kohlenwasserstoffrestes und Bildung der entsprechenden Siloxane (Si-H + RO-Si => Si-O-Si + RH) in Gegenwart von Tris(pentafluorphenyl)bor [B(C₆F₅)₃] als Katalysator zur Reaktion bringen.

Ein Nachteil bei der Verwendung von B(C₆F₅)₃ ist, dass der Katalysator während der Umsetzung unter Bildung katalytisch inaktiver Verbindungen, insbesondere Dimethyl(pentafluorphenyl)silan verbraucht wird. Dadurch wird die Reaktion verlangsamt und es besteht die Gefahr, dass die Umsetzung vorzeitig zum Stillstand kommt. Es muss dann erneut Katalysator zugegeben werden. Dies verkompliziert die Prozessführung erheblich und verschlechtert die Reproduzierbarkeit der Umsetzung. Der Einsatz verhältnismäßig großer Mengen Katalysator schon bei Reaktionsbeginn stellt keine Lösung des Problems dar, da dies zu einem ungünstigen Prozessverlauf mit einer sehr raschen Anfangsphase führt, die aufgrund der Exothermie der Reaktion technisch nur schwer kontrollierbar ist und ein erhebliches Sicherheitsrisiko darstellt. Außerdem wird das Verfahren durch den erhöhten Katalysatoreinsatz und dessen Verbrauch durch Desaktivierung erheblich verteuert. WO2013/142956 beschreibt die gleiche Reaktion unter Verwendung verschiedener Salze und Licht.

Es bestand daher die Aufgabe, ein Verfahren bereitzustellen, welches die obengenannten Nachteile nicht aufweist. Gegenstand der Erfindung ist ein Verfahren zur Herstellung von Siloxanen, bei dem
eine Verbindung **A** mit einer Verbindung **B** oder
eine Verbindung **A** mit einer Verbindung **C** oder
eine Verbindung **B** mit einer Verbindung **C** oder
eine Verbindung **C** ohne Verbindung **A** und **B**
in Gegenwart einer Verbindung **D** bei mindestens 40°C umgesetzt wird,
wobei
Verbindung **A** ein Silan oder ein Siloxan ist, welches mindestens ein direkt an Silicium gebundenes Wasserstoffatom enthält,
Verbindung **B** ein Silan oder ein Siloxan ist, welches mindestens eine direkt an Silicium gebundene Alkoxygruppierung enthält,
Verbindung **C** ein Silan oder ein Siloxan ist, welches mindestens ein direkt an Silicium gebundenes Wasserstoffatom und mindestens eine direkt an Silicium gebundene Alkoxygruppierung enthält und
Verbindung **D** eine kationische Si(II)-Verbindung der allgemeinen Formel V

**([Si(II)Cp]⁺)ₐ X^{a-}** **(V)**

ist, worin
- **Cp**: ein π-gebundener Cyclopentadienylrest der allgemeinen Formel **VI** ist, welcher mit den Resten **R^{y}** substituiert ist,

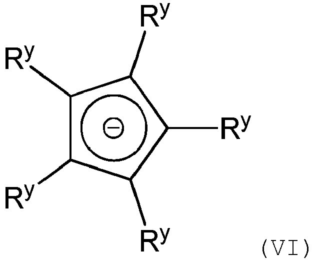

- **R^{y}**: einwertige Reste oder mehrwertige Reste sind, die zur Bildung anellierter Ringe auch miteinander verbunden sein können und
- **X^{a-}**: ein **a** wertiges Anion bedeutet, welches unter den Reaktionsbedingungen mit dem kationischen Silicium(II)zentrum nicht reagiert, oder
die Verbindung **D** ausgewählt wird aus den kationischen Si(II)-Verbindungen: 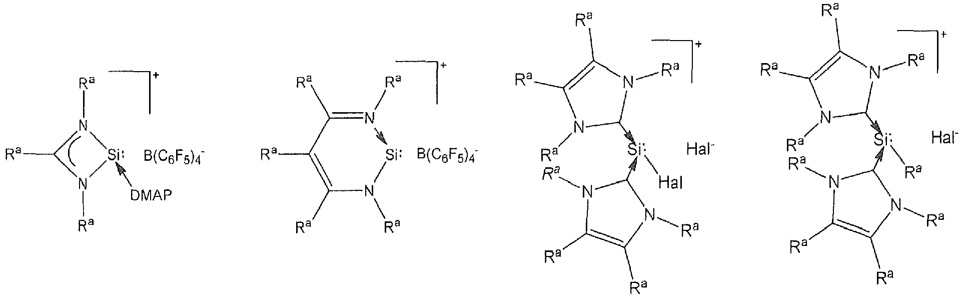 wobei die Reste **R^{a}** unabhängig voneinander Kohlenwasserstoffreste und **Hal** Halogen bedeuten.

Bei dem Verfahren werden Silane und/oder Siloxane über eine Kondensationsreaktion, unter Bildung von Siloxangruppierungen umgesetzt.

Gegenstand der Erfindung ist auch eine Mischung **M**, enthaltend
eine Verbindung **A** mit einer Verbindung **B** oder
eine Verbindung **A** mit einer Verbindung **C** oder
eine Verbindung **B** mit einer Verbindung **C**
und eine Verbindung **D**,
mit der Maßgabe, dass die Verbindung **B** keine Vinylgruppe aufweist.

Es wurde überraschend gefunden, dass die Umsetzung von Si-Alkoxygruppierungen enthaltenden Organosiliciumverbindungen mit Si-H Gruppierungen enthaltenden Organosiliciumverbindungen in Gegenwart einer kationischen Silicium(II)-verbindung als Katalysator unter Bildung von Si-O-Si-Bindungen, d.h. Siloxangruppierungen, ohne die oben genannten Nachteile abläuft. Dadurch wird die Prozessführung wesentlich vereinfacht und die Reproduzierbarkeit der Umsetzung deutlich erhöht. Der zu erhöhten Kosten führende Mehrverbrauch an Katalysator wird vermieden.

Die Verbindung **A** mit mindestens einem direkt an Silicium gebundenen Wasserstoffatom hat bevorzugt die allgemeine Formel I

**R¹R²R³Si-H** **(I)**

wobei die Reste **R¹, R²** und **R³** unabhängig voneinander die Bedeutung Wasserstoff, Halogen, Silyloxyrest oder Kohlenwasserstoffrest haben, wobei jeweils einzelne Kohlenstoffatome durch Sauerstoffatome, Halogen, Schwefel oder Phosphoratome ersetzt sein können.

Besonders bevorzugt bedeuten die Reste **R¹, R²** und **R³** unabhängig voneinander Wasserstoff, Halogen, unverzweigten, verzweigten, linearen, acyclischen oder cyclischen, gesättigten oder einfach oder mehrfach ungesättigten C1-C20-Kohlenwasserstoffrest oder unverzweigten, verzweigten, linearen oder cyclischen, gesättigten oder einfach oder mehrfach ungesättigten C1-C20-Kohlenwasserstoffoxyrest, wobei einzelne Kohlenstoffatome durch Sauerstoff, Halogen oder Schwefel ersetzt sein können, oder Silyloxyrest, vorzugsweise der allgemeinen Formel **II**

**(SiO_{4/2})ₐ(R^{x}SiO_{3/2})_{b}(R^{x}₂SiO_{2/2})_{c}(R^{x}₃SiO_{1/2})_{d}⁻** **(II)**

in der
**R^{x}** unabhängig voneinander Wasserstoff, Halogen, unverzweigten, verzweigten, linearen, acyclischen oder cyclischen, gesättigten oder einfach oder mehrfach ungesättigten C1-C20-Kohlenwasserstoffrest oder unverzweigten, verzweigten, linearen oder cyclischen, gesättigten oder einfach oder mehrfach ungesättigten C1-C20-Kohlenwasserstoffoxyrest bedeuten, wobei einzelne Kohlenstoffatome durch Sauerstoff, Halogen oder Schwefel ersetzt sein können,
**a, b, c** und **d** unabhängig voneinander ganzzahlige Werte von 0 bis 100000 bedeuten, wobei die Summe aus **a, b, c** und **d** zusammen mindestens den Wert 1 annimmt.

Ganz besonders bevorzugt bedeuten die Reste **R¹, R²** und **R³** unabhängig voneinander Wasserstoff, Chlor, C1-C3-Alkyl- oder Alkylenrest, Phenylrest oder Silyloxyrest der allgemeinen Formel **II**, in der **R^{x}** unabhängig voneinander Wasserstoff, Chlor, C1-C6 Alkyl oder Alkylen oder Phenyl bedeuten.
Besonders bevorzugte Reste **R¹, R²** und **R³** sind die Reste Methyl, Ethyl, Propyl, Phenyl, Chlor oder Silyloxyrest, insbesondere der allgemeinen Formel **II**.
Besonders bevorzugte Reste **R^{x}** sind die Reste Methyl, Ethyl, Propyl, Phenyl und Chlor.
Beispiele für Verbindungen **A** der allgemeinen Formel (I) sind die folgenden Silane (Ph = Phenyl, Me = Methyl, Et = Ethyl): Me₃SiH, Et₃SiH, Me₂PhSiH, MePh₂SiH, Me₂ClSiH, Et₂ClSiH, MeCl₂SiH, Cl₃SiH, Me₃Si-O-SiMe₂H, HSiMe₂-O-SiMe₂H, Me₃Si-O-SiHMe-O-SiMe₃, H-SiMe₂-(O-SiMe₂)ₘ-O-SiMe₂-H mit m = 1 bis 20000, Me₃Si-O-(SiMe₂-O)ₙ(SiHMe-O)ₒ-SiMe₃ mit n = 1 bis 20000 und o = 1 bis 20000.
Die Verbindung **A** kann auch eine Mischung verschiedener Verbindungen der allgemeinen Formeln **(I)** sein, bei denen gegebenenfalls die Reste **R¹, R²** und **R³** verschiedene Reste der allgemeinen Formel **(II)** sein können.

Die Verbindung **B** mit mindestens einer direkt an Silicium gebundenen Alkoxygruppierung hat bevorzugt die allgemeine Formel **III**

**R⁴R⁵R⁶Si-O-CH₂-R⁷** **(III)**

wobei die Reste **R⁴, R⁵** und **R⁶** unabhängig voneinander die Bedeutung Wasserstoff, Halogen, Silyloxyrest, vorzugsweise der allgemeinen Formel **II**, oder Kohlenwasserstoffrest haben, wobei jeweils einzelne Kohlenstoffatome durch Sauerstoffatome, Halogen, Schwefel oder Phosphoratome ersetzt sein können und **R⁷** die Bedeutung Wasserstoff oder Kohlenwasserstoffrest hat, bei dem einzelne nicht benachbarte Kohlenstoffatome durch Sauerstoffatome, Silicium-, Halogen-, Schwefel- oder Phosphoratome ersetzt sein können.

Besonders bevorzugt bedeuten die Reste **R⁴, R⁵** und **R⁶** unabhängig voneinander Wasserstoff, Halogen, unverzweigten, verzweigten, linearen, acyclischen oder cyclischen, gesättigten oder einfach oder mehrfach ungesättigten C1-C20-Kohlenwasserstoffrest oder unverzweigten, verzweigten, linearen oder cyclischen, gesättigten oder einfach oder mehrfach ungesättigten C1-C20-Kohlenwasserstoffoxyrest, wobei einzelne Kohlenstoffatome durch Sauerstoff, Halogen oder Schwefel ersetzt sein können, oder Silyloxyrest der allgemeinen Formel **II**, in der
**R^{x}** die vorstehenden Bedeutungen und bevorzugten Bedeutungen aufweist.
Besonders bevorzugt bedeutet **R⁷** Wasserstoff, unverzweigten, verzweigten, linearen, acyclischen oder cyclischen, gesättigten oder einfach oder mehrfach ungesättigten C1-C20-Kohlenwasserstoffrest oder unverzweigten, verzweigten, linearen oder cyclischen, gesättigten oder einfach oder mehrfach ungesättigten C1-C20-Kohlenwasserstoffoxyrest, wobei einzelne Kohlenstoffatome durch Sauerstoff, Halogen oder Schwefel ersetzt sein können, oder Silyloxyrest der allgemeinen Formel **II**, in der
**R^{x}** die vorstehenden Bedeutungen und bevorzugten Bedeutungen aufweist.
**a, b, c** und **d** bedeuten unabhängig voneinander ganzzahlige Werte von 0 bis 100000, wobei die Summe aus **a, b, c** und **d** zusammen mindestens den Wert 1 annimmt.

Bevorzugt bedeutet **a** Werte von 1 bis 500, insbesondere 2 bis 50.
Bevorzugt bedeutet **b** Werte von 1 bis 500, insbesondere 2 bis 50.
Bevorzugt bedeutet **c** Werte von 3 bis 10000, insbesondere 4 bis 1000.
Bevorzugt bedeutet **d** Werte von 1 bis 100, insbesondere 2. Bevorzugt ist die Summe **a+b+c+d** 4 bis 20000, besonders bevorzugt 6 bis 5000, insbesondere 10 bis 500.

Ganz besonders bevorzugt bedeuten die Reste **R⁴, R⁵** und **R⁶** unabhängig voneinander Wasserstoff, Chlor, C1-C3-Alkyl- oder Alkylenrest, Phenylrest oder Silyloxyrest der allgemeinen Formel **II**, in der **R^{x}** unabhängig voneinander Wasserstoff, Chlor, C1-C6 Alkyl oder Alkylen oder Phenyl bedeuten.

Ganz besonders bevorzugt bedeutet **R⁷** Wasserstoff, C1-C6-Alkyl- oder Alkylenrest oder Phenylrest.

Besonders bevorzugte Reste **R⁴, R⁵** und **R⁶** sind die Reste Methyl, Ethyl, Propyl, Phenyl, Chlor oder Silyloxyrest, insbesondere der allgemeinen Formel **II**.
Besonders bevorzugte Reste **R⁷** sind die Reste Methyl, Ethyl, Propyl, Butyl oder Pentyl.

Besonders bevorzugte Reste **R^{x}** sind die Reste Methyl, Ethyl, Propyl, Phenyl und Chlor.

Beispiele für Verbindungen **B** der allgemeinen Formel **III** sind die folgenden Silane (Ph = Phenyl, Me = Methyl, Et = Ethyl): Me₃SiOEt, Me₃SiOMe, Et₃SiOEt, Et₃SiOMe, Me₂PhSiOEt, Me₂PhSiOMe, MePh₂SiOEt, und die folgenden Siloxane:
Me₃Si-O-SiMe₂OMe, Me₃Si-O-SiMe₂OEt, EtOSiMe₂-O-SiMe₂OEt, Me₃Si-O-SiMe(OMe)-O-SiMe₃, Me₃Si-O-SiMe(OEt)-O-SiMe₃ MeO-SiMe₂-(O-SiMe₂)ₘ-O-SiMe₂-OMe und EtO-SiMe₂-(O-SiMe₂)ₘ-O-SiMe₂-OEt mit m = 1 bis 20000, Me₃Si-O-(SiMe₂-O)ₙ(SiMe(OMe)-O)ₒ-SiMe₃ und Me₃Si-O-(SiMe₂-O)ₙ(SiMe(OEt)-O)ₒ-SiMe₃ mit n = 1 bis 20000 und o = 1 bis 20000.

Die Verbindung **B** kann auch eine Mischung verschiedener Verbindungen der allgemeinen Formeln **III** sein, bei denen gegebenenfalls die Reste **R⁴, R⁵** und **R⁶** verschiedene Reste der allgemeinen Formel **II** sein können.

Die Verbindung **C** mit mindestens einem direkt an Silicium gebundenen Wasserstoffatom und mit mindestens einer direkt an Silicium gebundenen Alkoxygruppierung hat bevorzugt die allgemeine Formel **IV**

**R⁸R⁹R¹⁰Si-O-CH₂-R¹¹** **(IV)**

wobei die Reste **R⁸, R⁹** und **R¹⁰** unabhängig voneinander die Bedeutung Wasserstoff, Halogen, Silyloxyrest, vorzugsweise der vorstehenden allgemeinen Formel **II**, oder Kohlenwasserstoffrest haben, wobei jeweils einzelne Kohlenstoffatome durch Sauerstoffatome, Halogen, Schwefel oder Phosphoratome ersetzt sein können und
**R¹¹** die Bedeutung Wasserstoff oder Kohlenwasserstoffrest hat, bei dem einzelne nicht benachbarte Kohlenstoffatome durch Sauerstoffatome, Silicium-, Halogen-, Schwefel- oder Phosphoratome ersetzt sein können,
wobei mindestens einer der Reste **R⁸, R⁹** und **R¹⁰** ein Wasserstoff ist oder mindestens einer der Reste **R⁸, R⁹** und **R¹⁰** ein Silyloxyrest ist, der ein direkt an Silicium gebundenes Wasserstoffatom enthält.

Bevorzugte Reste **R⁸, R⁹** und **R¹⁰** entsprechen den bevorzugten Resten **R⁴, R⁵** und **R⁶**. Bevorzugte Reste **R¹¹** entsprechen den bevorzugten Resten **R⁷**.

Die Verbindung **D** enthält eine oder mehrere kationische Si(II)-Gruppierungen. Verbindung **D** sind Silicium(II)-Verbindungen, die in kationischer Form vorliegen - sogenannte Silyliumyliden-Kationen.

**Cp** bedeutet das Cyclopentadienyl-Anion, welches aus einem einfach negativ geladenen, aromatischen Fünfringsystem C₅R^{y}₅⁻besteht.
Die Reste **R^{y}** bedeuten unabhängig voneinander bevorzugt Wasserstoff, C1-C20 Kohlenwasserstoffreste, besonders bevorzugt lineare oder verzweigte, acyclische oder cyclische, gesättigte oder ein- oder mehrfach ungesättigte C1-C20 Alkyl- oder Aryl-, ganz besonders bevorzugt C1-C3 Alkyl-, insbesondere bevorzugt Methylreste.
Beispiele für Reste **R^{y}** sind Alkylreste, wie der Methyl-, Ethyl-, n-Propyl-, iso-Propyl-, n-Butyl-, sec-Butyl-, iso-Butyl-, tert.-Butyl-, n-Pentyl-, sec-Pentyl, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,4,4-Trimethylpentylrest; Nonylreste, wie der n-Nonylrest; Decylreste, wie der n-Decylrest; Dodecylreste, wie der n-Dodecylrest; Hexadecylreste, wie der n-Hexadecylrest; Octadecylreste, wie der n-Octadecylrest; Cycloalkylreste, wie der Cyclopentyl-, Cyclohexyl-, Cycloheptylrest und Methylcyclohexylrest; Arylreste, wie der Phenyl-, Naphthyl-, Anthryl- und Phenanthrylrest; Alkarylreste, wie der o-, m- und p-Tolyl-, Xylyl-, Mesitylenyl- und o-, m- und p-Ethylphenylrest; und Aralkylreste, wie der Benzylrest, der α- und der β-Phenylethylrest.

Die Herstellung der Verbindungen **D** ist in So et al, Chem. Eur. J. 2013, 19, 11786, Driess et al., Angew. Chem. Int. Ed. 2006, 45, 6730, Filippou, Angew. Chem. Int. Ed. 2013, 52, 6974, Sasamori et al, Chem. Eur. J. 2014, 20, 9246 und in Inoue et al., Chem. Commun. 2014, 50, 12619 (DMAP = Dimethylaminopyridin) beschrieben.
In den Formeln bedeuten die Reste **R^{a}** unabhängig voneinander bevorzugt Alkyl oder gegebenenfalls substituiertes Phenyl, besonders bevorzugt verzweigtes Alkyl oder 2,6-dialkyliertes Phenyl und Hal bedeutet Halogen, bevorzugt Chlor, Brom oder Jod. Beispiele für Reste **R^{a}** sind Methyl, Isopropyl, tert.-Butyl, 2,6-Diisopropylphenyl oder 2,4,6-Triisopropylphenyl.

**X^{a-}** bedeutet ein beliebiges **a** wertiges Anion, welches unter den Reaktionsbedingungen mit dem kationischen Silicium(II)-Zentrum nicht reagiert. Es kann sowohl anorganisch als auch organisch sein. Vorzugsweise hat **a** die Werte 1, 2, oder 3, insbesondere 1.
**X⁻** bedeutet bevorzugt Halogen oder ein komplexes Anion wie BF₄⁻, ClO₄⁻, AlZ₄⁻, MF₆⁻ mit **Z** = Halogen und **M** = P, As oder Sb, oder Arylboratanion, wobei der Arylrest bevorzugt Phenyl oder fluoriertes oder mit Perfluoralkylresten substituiertes Phenyl bedeutet, einwertiges polyedrisches Anion, wie z.B. Carboratanion, oder Alkoxy- und Aryloxymetallation.

Beispiele für Anionen **X⁻** sind Tetrachlorometallate [MCl₄]⁻ mit M = Al, Ga, Tetrafluoroborate [BF₄]⁻, Hexafluorometallate [MF₆]⁻ mit M = As, Sb, Ir, Pt, Perfluoroantimonate [Sb₂F₁₁]⁻, [Sb₃F₁₆]⁻ und [Sb₄F₂₁]⁻, Triflat (= Trifluoromethanesulfonat) [OSO₂CF₃]⁻, Tetrakis (trifluormethyl) borat [B(CF₃)₄]⁻, Tris(pentafluorophenyl)hydridometallate [MH(C₆F₅)₃]⁻ mit M = B, Al, Ga, Tetrakis(pentafluorophenyl)metallate [M(C₆F₅)₄]⁻ mit M = B, Al, Ga, Tetrakis(pentachlorophenyl)borat [B(C₆Cl₅)₄]⁻, Tetrakis[(2,4,6-trifluoromethyl(phenyl)]borat {B[C₆H₂(CF₃)₃]}⁻, [Bis[tris(pentafluorophenyl)]hydroxid {HO[B(C₆F₅)₃]₂}⁻, *Closo-*Carborate [CHB₁₁H₅Cl₆]⁻, [CHB₁₁H₅Br₆]⁻, [CHB₁₁(CH₃)₅Br₆]⁻, [CHB₁₁F₁₁]⁻ , [C(Et)B₁₁F₁₁]⁻, [CB₁₁(CF₃)₁₂]⁻ und B₁₂Cl₁₁N(CH₃)₃]⁻, Tetra (perfluoroalkoxy)aluminate [Al(OR^{PF})₄]⁻, Tris(perfluoroalkoxy)-fluoroaluminate [FAl(OR^{PF})₃]⁻, Hexakis(oxypentafluorotellur)antimonat [Sb(OTeF₅)₆]⁻.

Eine Übersicht über besonders bevorzugte komplexe Anionen **X⁻** findet sich z.B. in Krossing et. al., Angew. Chem. 2004, 116, 2116.

Die Herstellung der kationischen Silicium-(II)-Verbindung der allgemeinen Formel **V** kann beispielsweise durch Zugabe einer Säure H⁺X⁻ zu der Verbindung Si(II)Cp₂, durch die einer der anionischen Cp-Reste in protonierter Form abgespalten wird, erfolgen:

Si(II)Cp₂ + H⁺X⁻ -> Si(II)⁺Cp X⁻ + CpH

Das Anion **X⁻** der Säure HX bildet dann das Gegenion der kationischen Silicium(II)-Verbindung.
Eine Herstellungsmethode für die kationische Si(II) Verbindung der allgemeinen Formel **V** ist in Science 2004, 305, S. 849-851, beschrieben.

Das molare Verhältnis zwischen den vorhandenen direkt an Silicium gebundenen Wasserstoffatomen und direkt an Silicium gebundenen Alkoxygruppierungen beträgt bevorzugt 1:100 bis 100:1, besonders bevorzugt 1: 10 bis 10:1, ganz besonders bevorzugt 1 : 2 bis 2 : 1.

Der molare Anteil der kationischen Silicium(II)-Verbindung D beträgt bezogen auf die vorhandenen Si-H-Gruppierungen bevorzugt mindestens 0,0001 Mol % und höchstens 10 Mol %, besonders bevorzugt mindestens 0,001 Mol % und höchstens 1 Mol %, ganz besonders bevorzugt mindestens 0,01 Mol % und höchstens 0,1 Mol %.
Die Verbindungen **A, B, C** und **D** können in beliebiger Reihenfolge vermischt werden, wobei das Vermischen in einer der Fachkraft bekannten Weise erfolgt. In einer bevorzugten Ausführungsform werden Verbindung **A** und Verbindung **B** und gegebenenfalls **C** gemischt und die Verbindung **D** anschließend zugegeben, vorzugsweise unter Rühren.

Die Komponenten **A, B, C** und **D** können gegebenenfalls in einem Lösemittel oder in einem Lösemittelgemisch vorgelöst und dann vereinigt werden. In einer besonderen Ausführungsform wird die Verbindung **D** (Feststoff) in einem Lösemittel gelöst und dann mit der Mischung aus **A** und **B** und gegebenenfalls **C** vereinigt. Der Anteil des Lösemittels oder des Lösemittelgemisches beträgt bezogen auf die Verbindung **A** bevorzugt mindestens 0,01 Gew. % und höchstens die 1000-fache Gewichtsmenge, besonders bevorzugt mindestens 1 Gew. % und höchstens die 100-fache Gewichtsmenge, ganz besonders bevorzugt mindestens 10 Gew. % und höchstens die 10-fache Gewichtsmenge.
Als Lösemittel können bevorzugt aprotische Lösemittel, beispielsweise Kohlenwasserstoffe wie Pentan, Hexan, Heptan, Cyclohexan oder Toluol, Chlorkohlenwasserstoffe wie Dichlormethan, Chloroform, Chlorbenzol oder 1,2-Dichlorethan, oder Nitrile wie z.B. Acetonitril oder Propionitril, eingesetzt werden.
Lösemittel oder Lösemittelgemische mit einem Siedepunkt bzw. Siedebereich von bis zu 120° C bei 0,1 MPa sind bevorzugt.

Bevorzugt handelt es sich bei den Lösemitteln um aromatische oder aliphatische Kohlenwasserstoffe.
Die Umsetzung kann unter Umgebungsdruck oder unter vermindertem oder unter erhöhtem Druck durchgeführt werden.
Der Druck beträgt bevorzugt mindestens 0,01 bar und höchstens 100 bar, besonders bevorzugt mindestens 0,1 bar und höchstens 10 bar, ganz besonders bevorzugt wird die Umsetzung bei Umgebungsdruck durchgeführt.
Die Umsetzung von **A** und **B** und gegebenenfalls **C** in Gegenwart von **D** erfolgt bevorzugt bei Temperaturen zwischen mindestens 40°C und höchstens + 200°C, besonders bevorzugt zwischen mindestens 50°C und höchstens 150°C, ganz besonders bevorzugt zwischen mindestens 60°C und höchstens 120°C.

Die Mischung kann als nicht mit den Komponenten **A, B, C** und **D** reaktive Zusätze **E** beliebige weitere Verbindungen wie z.B. Prozesshilfsstoffe, z.B. Emulgatoren, Füllstoffe, z.B. hochdisperse Kieselsäure oder Quarz, Haftvermittler, Stabilisatoren, z.B. Radikalinhibitoren, Pigmente, z.B. Farbstoffe oder Weißpigmente, z.B. Kreide oder Titandioxid, Weichmacher, organische Polymere, Hitzestabilisatoren, Inhibitoren, biologisch aktive Wirkstoffe und Polyorganosiloxane, z.B. Polyorganosiloxanöle, wie Polydimethylsiloxanöle (Ak-Öle), und harzartige Polyorganosiloxane enthalten. Die Zusätze **E** sind vorzugsweise beim Verfahren anwesend.
Die Mischung aus **A, B** und gegebenenfalls **C** und **D** enthält die nicht mit den Kompo-nenten reagierenden Zusätze vorzugsweise zu einem Anteil von 0,0001 bis 70 Gew.-%, insbesondere zu einem Anteil 0,1 bis 40 Gew.-%.

In einer weiteren Ausführungsform werden Copolymere hergestellt, indem Komponenten **A** eingesetzt werden, welche mehr als eine Si-H-Gruppierung enthalten und Komponenten **B**, die mehr als eine Silicium-Alkoxygruppierung enthalten oder Verbindungen **C**, welche sowohl Si-H-Gruppierungen als auch Si-AlkoxyGruppierungen enthalten.

In einer weiteren Ausführungsform wird die erfindungsgemäße Kondensationsreaktion zur Entfernung geringer Anteile an Si-Alkoxy-Gruppierungen, die als labile und daher oftmals in Anwendungen störende Verunreinigungen in Produkten vorhanden sind, die über andere Prozesse, beispielsweise hydrolytische Kondensationsreaktionen, hergestellt wurden, eingesetzt, indem diese mit **A** in Gegenwart von **D** umgesetzt werden.
Die labilen Si-Alkoxygruppierungen werden hierbei in inerte Si-O-Si-Gruppierungen umgewandelt.
In analoger Weise können auch Produkte, welche noch unerwünschte Si-H-Gruppierungen, beispielsweise aus Hydrosilylierungsreaktionen, enthalten, durch Umsetzung mit **B** in Gegenwart von **D** umgesetzt werden.

Alle vorstehenden Symbole der vorstehenden Formeln weisen ihre Bedeutungen jeweils unabhängig voneinander auf.

Es sind, falls jeweils nicht anders angegeben, alle Mengen- und Prozentangaben auf das Gewicht bezogen, und alle Temperaturen 20°C.

### Beispiel 1

301,2 mg (1,11 mmol) Diethoxydiphenylsilan und 326,7 mg (2,20 mmol) 1,1,3,3,3-Pentamethyldisiloxan werden unter Inertgasatmosphäre bei 20 bis 25°C gemischt und unter Schütteln mit einer Lösung von 0,108 mg (0,160 µmol, ca. 172 ppm) (π-Me₅C₅)Si⁺ HB(C₆F₅)₃⁻ in 41 mg Dideuterodichlormethan versetzt. Man erwärmt die Mischung 2 Std. auf 60°C, wobei sich gasförmiges Ethan entwickelt, und das gebildete Reaktionsprodukt 1,1,1-,3,3,7,7,9,9,9-Decamethyl-5,5-diphenylpentasiloxan NMR-spektroskopisch untersucht.
¹H-NMR (CD₂Cl₂) : δ = 0,16 (s, 2 SiMe₃), 0,21 (s, 2 SiMe₂), 7,41-7,52 (m, 6 aromat. H), 7,73-7,80 (m, 4 aromat. H) ppm.

### Beispiel 2

181,2 mg (0,665 mmol) Diethoxydiphenylsilan werden mit 99,6 mg (0,742 mmol) 1,1,3,3-Tetramethyldisiloxan werden unter Inertgasatmosphäre bei 20 bis 25°C gemischt und unter Schütteln mit einer Lösung von 0,228 mg (0,160 µmol, ca. 172 ppm) (π-Me₅C₅)Si⁺ HB(C₆F₅)₃⁻ in 90 mg Dideuterodichlormethan bei Raumtemperatur versetzt. Man erwärmt die Mischung 2 Std. auf 60°C, wobei sich gasförmiges Ethan entwickelt und die Signale der Si-OEt und der Si-H-Gruppen im ¹H-NMR-Spektrum im Bereich < 5 % der liegen. Molekulargewicht des gebildeten copolymeren Produkts (Bestimmung über GPLC) ∼ 10000 D.

### Beispiel 3

150,6 mg eines Trimethylsiloxy-endterminierten Polysiloxans mit seitenständigen Si-H-Gruppierungen der Zusammensetzung Me₃Si-O-(SiMe₂-O)ₓ-(SiHMe-O)_{y}-SiMe₃, mit x ∼ 28,5 und y ∼ 11,4, (entspricht 0,584 mmol Si-H) und 78,5 mg (0,664 mmol) Trimethylethoxysilan werden bei 20 bis 25°C vermischt und mit 0,147 mg (0,217 µmol, ca. 642 ppm) (π-Me₅C₅)Si⁺ HB(C₆F₅)₃⁻ in 58 mg Dideuterodichlormethan versetzt. Man erwärmt die Mischung 2 Std. auf 60°C, wobei sich gasförmiges Ethan entwickelt, und untersucht das gebildete Reaktionsprodukt NMR-spektroskopisch. Das ¹H-NMR-Spektrum in CD₂Cl₂ zeigt, dass die Si-H-Gruppierungen vollständig abreagiert haben.
²⁹Si-NMR (CD₂Cl₂): δ (ppm) = -68 bis -65 ppm (O-SiMe(OSiMe₃)-O), -23 bis -19 (O-SiMe₂-O), 7-8 (O-SiMe₃)ppm.

### Beispiel 4

102,4 mg (0,98 mmol) Methoxytrimethylsilan und 159,1 mg (1,17 mmol) Dimethylphenylsilan werden unter Inertgasatmosphäre bei 20 bis 25°C gemischt und mit einer Lösung von 0,196 mg (0,223 µmol) (π-Me₅C₅)Si⁺ B(C₆F₅)₄⁻ in 35 mg Dideuterodichlormethan versetzt. Man erwärmt die Mischung 2 Std. auf 80°C, wobei sich 1,1-Dimethyl-1-phenyl-3,3,3-trimethyldisiloxan unter Abspaltung von gasförmigem Methan bildet. Das Produkt wird gaschromatographisch und NMR-spektroskopisch untersucht. ¹H-NMR (CD₂Cl₂): δ=0,30 (s, SiMe₃), 0,52 (s, SiMe₂), 7,46-7,57 (m, 3 aromat. H), 7,69-7,79 (m, 2 aromat. H).

### Beispiel 5

101,9 mg (0,862 mmol) Ethoxytrimethylsilan und 150,8 mg (1,02 mmol) 1,1,3,3,3-Pentamethyldisiloxan werden unter Inertgasatmosphäre bei 20 bis 25°C vermischt und unter Schütteln mit einer Lösung von 0,80 mg (0,95 µmol) (π-Me₅C₅)Si⁺ B(C₆F₅)₄⁻ in 10 mg Dideuterodichlormethan versetzt. Man erwärmt die Mischung 2 Std. auf 80°C, wobei sich unter Abspaltung von gasförmigem Ethan 1,1,1,3,3,5,5,5-Octamethyltrisiloxan bildet. Die ¹H-NMR-Untersuchung zeigt, dass sowohl das Si-H-Signal als auch die Signale der Ethoxygruppe verschwunden sind.

### Beispiel 6

130 mg (1,46 mmol) Dimethylethoxysilan werden unter Inertgasatmosphäre bei 20 bis 25°C unter Schütteln mit einer Lösung von 0,12 mg (0,18 µmol) (π-Me₅C₅)Si⁺ HB(C₆F₅)₃⁻ in 10 mg Dideuterodichlormethan versetzt. Man erwärmt die Mischung 2 Std. auf 80°C, wobei sich unter Abspaltung von gasförmigem Ethan ein Polydimethylsiloxan bildet. Die ¹H-NMR-Untersuchung zeigt, dass sowohl das Si-H-Signal als auch die Signale der Ethoxygruppe weitgehend verschwunden sind (Restanteile < 2 %).

### Beispiel 7

203,2 mg (0,746 mmol) Diethoxydiphenylsilan und 139,9 mg (1,48 mmol) Dimethylchlorsilan werden unter Inertgasatmosphäre vermischt und unter Schütteln mit einer Lösung von 0,32 mg (0,47 µmol) (π-Me₅C₅)Si⁺ HB(C₆F₅)₃⁻ in 23 mg Dideuterodichlormethan versetzt. Man erwärmt die Mischung 2 Std. auf 60°C, wobei sich unter Abspaltung von gasförmigem Ethan 1,5-Dichlor-1,1,5,5-tetramethyl-3,3-diphenyltrisiloxan bildet. Die ¹H-NMR-Untersuchung zeigt außerdem, dass sowohl das Si-H-Signal als auch die Signale der Ethoxygruppe verschwunden sind. Produktanalytik: ¹H-NMR (CD₂Cl₂) : δ=0,55 (s, 2 ClSiMe₂), 7,37-7,54 (m, 2 x 3 aromat. H), 7,66-7,75 (m, 2 x 2 aromat. H). Massenspektrum: m/e = 400 / 402 (M⁺ - H).

### Beispiel 8: Herstellung von Cp*Si⁺ BH(C₆F₅)₃-

Alle Arbeitsschritte werden unter Ar ausgeführt. 100 mg (0,335 mmol) Decamethylsilicocen und 172 mg (0,335 mmol) Tris(pentafluorphenyl)bor werden jeweils in 0,5 ml CD₂Cl₂ gelöst und die beiden Lösungen vereinigt. Man versetzt mit Heptan, wobei sich ein farbloser kristalliner Niederschlag der Verbindung (Me₅C₅)Si⁺ BH(C₆F₅)₃⁻ bildet. Die Suspension wird im Vakuum zur Entfernung von CD₂Cl₂ etwas eingeengt und nochmals mit 1 ml Heptan versetzt. Man entfernt die Lösung mit einer Spritze und wäscht den kristallinen Rückstand noch zweimal mit je 1 ml Heptan. Man trocknet ihn im Hochvakuum bei 20°C und erhält 155 mg (64 %) des reinen Produkts (Me₅C₅)Si⁺ BH(C₆F₅)₃⁻.

## Patentansprüche

1. Verfahren zur Herstellung von Siloxanen, bei dem
eine Verbindung **A** mit einer Verbindung **B** oder
eine Verbindung **A** mit einer Verbindung **C** oder
eine Verbindung **B** mit einer Verbindung **C** oder
eine Verbindung **C** ohne Verbindung **A** und **B**
in Gegenwart einer Verbindung **D** bei mindestens 40°C umgesetzt wird,
wobei
Verbindung **A** ein Silan oder ein Siloxan ist, welches mindestens ein direkt an Silicium gebundenes Wasserstoffatom enthält,
Verbindung **B** ein Silan oder ein Siloxan ist, welches mindestens eine direkt an Silicium gebundene Alkoxygruppierung enthält,
Verbindung **C** ein Silan oder ein Siloxan ist, welches mindestens ein direkt an Silicium gebundenes Wasserstoffatom und mindestens eine direkt an Silicium gebundene Alkoxygruppierung enthält und
Verbindung **D** eine kationische Si(II)-Verbindung der allgemeinen Formel V
**([Si(II)Cp]⁺)ₐ X^{a-}** **(V)**
ist, worin
**Cp** ein π-gebundener Cyclopentadienylrest der allgemeinen Formel **VI** ist, welcher mit den Resten **R^{y}** substituiert ist, 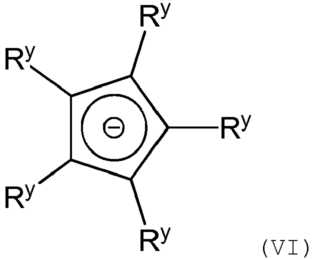
**R^{y}** einwertige Reste oder mehrwertige Reste sind, die zur Bildung anellierter Ringe auch miteinander verbunden sein können und
**X^{a-}** ein **a** wertiges Anion bedeutet, welches unter den Reaktionsbedingungen mit dem kationischen Silicium(II)zentrum nicht reagiert, oder die Verbindung **D** ausgewählt wird aus den kationischen Si(II)-Verbindungen: 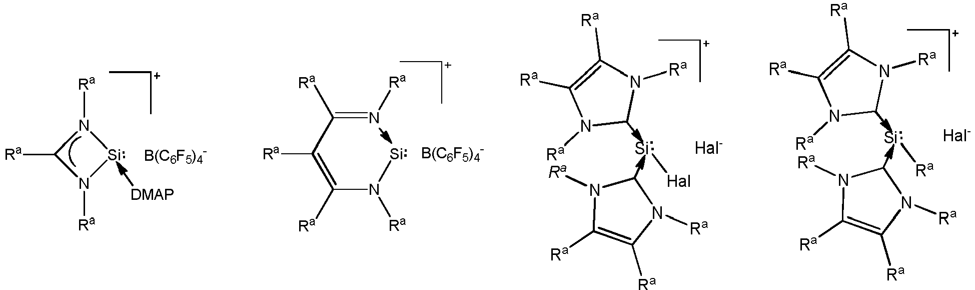
wobei die Reste **R^{a}** unabhängig voneinander Kohlenwasserstoffreste und **Hal** Halogen bedeuten.

2. Mischung **M**, enthaltend
(a) eine Verbindung **A** mit einer Verbindung **B** oder
eine Verbindung **A** mit einer Verbindung **C** oder
eine Verbindung **B** mit einer Verbindung **C**
und (b) eine Verbindung **D**,
wobei die Verbindungen **A**, **B**, **C** und **D** in Anspruch 1 beschrieben sind,
mit der Maßgabe, dass die Verbindung **B** keine Vinylgruppe aufweist.

3. Verfahren nach Anspruch 1 oder Mischung **M** nach Anspruch 2, wobei die Verbindung **A** die allgemeine Formel I
**R¹R²R³Si-H** **(I)**
aufweist, wobei die Reste **R¹, R²** und **R³** unabhängig voneinander die Bedeutung Wasserstoff, Halogen, Silyloxyrest oder Kohlenwasserstoffrest haben, wobei jeweils einzelne Kohlenstoffatome durch Sauerstoffatome, Halogen, Schwefel oder Phosphoratome ersetzt sein können.

4. Verfahren nach Anspruch 1 oder 3 oder Mischung **M** nach Anspruch 2 oder 3, wobei die Verbindung **B** die allgemeine Formel **III**
**R⁴R⁵R⁶Si-O-CH₂-R⁷** **(III)**
aufweist, wobei die Reste **R⁴, R⁵** und **R⁶** unabhängig voneinander die Bedeutung Wasserstoff, Halogen, Silyloxyrest oder Kohlenwasserstoffrest haben, wobei jeweils einzelne Kohlenstoffatome durch Sauerstoffatome, Halogen, Schwefel oder Phosphoratome ersetzt sein können und
**R⁷** die Bedeutung Wasserstoff oder Kohlenwasserstoffrest hat, bei dem einzelne nicht benachbarte Kohlenstoffatome durch Sauerstoffatome, Silicium-, Halogen-, Schwefel- oder Phosphoratome ersetzt sein können.

5. Verfahren nach Anspruch 1, 3 oder 4 oder Mischung **M** nach Anspruch 2, 3 oder 4, wobei die Verbindung **C** die allgemeine Formel **IV**
**R⁸R⁹R¹⁰Si-O-CH₂-R¹¹** **(IV)**
aufweist, wobei die Reste **R⁸, R⁹** und **R¹⁰** unabhängig voneinander die Bedeutung Wasserstoff, Halogen, Silyloxyrest, oder Kohlenwasserstoffrest haben, wobei jeweils einzelne Kohlenstoffatome durch Sauerstoffatome, Halogen, Schwefel oder Phosphoratome ersetzt sein können und
**R¹¹** die Bedeutung Wasserstoff oder Kohlenwasserstoffrest hat, bei dem einzelne nicht benachbarte Kohlenstoffatome durch Sauerstoffatome, Silicium-, Halogen-, Schwefel- oder Phosphoratome ersetzt sein können,
wobei mindestens einer der Reste **R⁸, R⁹** und **R¹⁰** ein Wasserstoff ist oder mindestens einer der Reste **R⁸, R⁹** und **R¹⁰** ein Silyloxyrest ist, der ein direkt an Silicium gebundenes Wasserstoffatom enthält.

6. Verfahren oder Mischung **M** nach Anspruch 3, 4 oder 5, wobei der Silyloxyrest die allgemeine Formel **II**
**(SiO_{4/2})ₐ(R^{x}SiO_{3/2})_{b}(R^{x}₂SiO_{2/2})_{c}(R^{x}₃SiO_{1/2})_{d}-** **(II)**
aufweist, in der
**R^{x}** unabhängig voneinander Wasserstoff, Halogen, unverzweigten, verzweigten, linearen, acyclischen oder cyclischen, gesättigten oder einfach oder mehrfach ungesättigten C1-C20-Kohlenwasserstoffrest oder unverzweigten, verzweigten, linearen oder cyclischen, gesättigten oder einfach oder mehrfach ungesättigten C1-C20-Kohlenwasserstoffoxyrest bedeuten, wobei einzelne Kohlenstoffatome durch Sauerstoff, Halogen oder Schwefel ersetzt sein können und
**a, b, c** und **d** unabhängig voneinander ganzzahlige Werte von 0 bis 100000 bedeuten, wobei die Summe aus a, b, c und d zusammen mindestens den Wert 1 annimmt.

7. Verfahren oder Mischung **M** nach Anspruch 6, wobei die Summe **a+b+c+d** 4 bis 20000 beträgt.

8. Verfahren oder Mischung **M** nach Anspruch 1 bis 7, wobei die Reste **R^{y}** unabhängig voneinander Wasserstoff oder C1-C20 Kohlenwasserstoffreste bedeuten.

9. Verfahren oder Mischung **M** nach Anspruch 1 bis 8, wobei **X⁻** ausgewählt wird aus BF₄⁻, ClO₄⁻, AlZ₄⁻, MF₆⁻ mit **Z** = Halogen und **M** = P, As oder Sb, Arylboratanion, wobei der Arylrest Phenyl oder fluoriertes oder mit Perfluoralkylresten substituiertes Phenyl bedeutet, aus einwertigem polyedrischen Anion, Alkoxy- und Aryloxymetallation, Tetrachlorometallaten [MCl₄]⁻ mit M = Al, Ga, Tetrafluoroboraten [BF₄]⁻, Hexafluorometallaten [MF₆]⁻ mit M = As, Sb, Ir, Pt, Perfluoroantimonaten [Sb₂F₁₁]⁻, [Sb₃F₁₆]⁻und [Sb₄F₂₁]⁻, Triflat (= Trifluoromethanesulfonat) [OSO₂CF₃]⁻, Tetrakis (trifluormethyl) borat [B(CF₃)₄]⁻, Tris(pentafluorophenyl)hydridometallaten [MH(C₆F₅)₃]⁻ mit M = B, Al, Ga, Tetrakis(pentafluorophenyl)metallaten [M(C₆F₅)₄]⁻ mit M = B, Al, Ga, Tetrakis(pentachlorophenyl)borat [B(C₆Cl₅)₄]⁻, Tetrakis[(2,4,6-trifluoromethyl(phenyl)]borat {B[C₆H₂(CF₃)₃]}⁻, [Bis[tris(pentafluorophenyl)]hydroxid {HO[B(C₆F₅)₃]₂}⁻, *Closo*-Carboraten [CHB₁₁H₅Cl₆]⁻, [CHB₁₁H₅Br₆]⁻, [CHB₁₁(CH₃)₅Br₆]⁻, [CHB₁₁F₁₁]⁻, [C(Et)B₁₁F₁₁]⁻, [CB₁₁(CF₃)₁₂]⁻ und B₁₂Cl₁₁N(CH₃)₃]⁻, Tetra(perfluoroalkoxy)aluminaten [Al(OR^{PF})₄]⁻, Tris(perfluoroalkoxy)fluoroaluminaten [FAl(OR^{PF})₃]⁻ und Hexakis(oxypentafluorotellur)antimonat [Sb(OTeF₅)₆]⁻.

10. Verfahren oder Mischung **M** nach Anspruch 1 bis 9, wobei nicht mit den Komponenten **A, B, C** und **D** reaktive Zusätze **E** anwesend sind, die ausgewählt werden aus Prozesshilfsstoffen, Füllstoffen, Haftvermittlern, Stabilisatoren, Pigmenten, Weichmachern, organischen Polymeren, Hitzestabilisatoren, Inhibitoren, biologisch aktiven Wirkstoffen und Polyorganosiloxanen.

## Claims

1. Method for preparing siloxanes, in which
a compound **A** is reacted with a compound **B** or
a compound **A** is reacted with a compound **C** or
a compound **B** is reacted with a compound **C** or
a compound **C** is reacted without compound **A** and **B** in the presence of a compound **D** at at least 40°C, wherein
compound **A** is a silane or a siloxane, which comprises at least one hydrogen atom bonded directly to silicon,
compound **B** is a silane or a siloxane, which comprises at least one alkoxy moiety bonded directly to silicon,
compound **C** is a silane or a siloxane, which comprises at least one hydrogen atom bonded directly to silicon and at least one alkoxy moiety bonded directly to silicon and
compound **D** is a cationic Si(II) compound of general formula **V**
**([Si(II)Cp]⁺)ₐ X^{a-},** **(V)**
in which
**Cp** is a π-bonded cyclopentadienyl radical of general formula **VI**, which is substituted by radicals **R^{y}**, 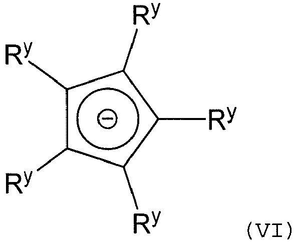
**R^{y}** are monovalent radicals or polyvalent radicals which can also bond to one another to form fused rings and
**X^{a-}** signifies an **a** valent anion, which does not react with the cationic silicon(II) centre under the reaction conditions, or the compound **D** is selected from the cationic Si(II) compounds: 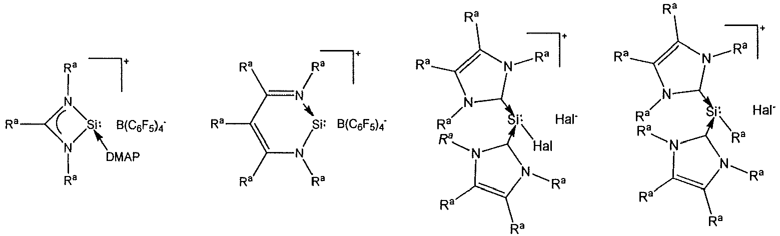
wherein the radicals **R^{a}** are each independently hydrocarbon radicals and **Hal** signifies halogen.

2. Mixture **M**, comprising
(a) a compound **A** with a compound **B** or
a compound **A** with a compound **C** or
a compound **B** with a compound **C**
and (b) a compound **D**,
wherein the compounds **A, B, C** and **D** are described in Claim 1,
with the proviso that compound **B** has no vinyl group.

3. Method according to Claim 1 or mixture **M** according to Claim 2, wherein the compound **A** has general formula I
**R¹R²R³Si-H** **(I)**
wherein the radicals **R¹, R²** and **R³** each independently have the definition hydrogen, halogen, silyloxy radical or hydrocarbon radical, wherein individual carbon atoms in each case may be replaced by oxygen atoms, halogen, sulfur or phosphorus atoms.

4. Method according to Claim 1 or 3 or mixture **M** according to Claim 2 or 3, wherein compound **B** has general formula **III**
**R⁴R⁵R⁶Si-O-CH₂-R⁷** **(III)**
wherein the radicals **R⁴, R⁵** and **R⁶** each independently have the definition hydrogen, halogen, silyloxy radical or hydrocarbon radical, wherein individual carbon atoms in each case may be replaced by oxygen atoms, halogen, sulfur or phosphorus atoms and **R⁷** has the definition hydrogen or hydrocarbon radical, in which individual non-adjacent carbon atoms may be replaced by oxygen atoms, silicon, halogen, sulfur or phosphorus atoms.

5. Method according to Claim 1, 3 or 4 or mixture **M** according to Claim 2, 3 or 4, wherein compound **C** has general formula **IV**
**R⁸R⁹R¹⁰Si-O-CH₂-R¹¹** **(IV)**
wherein the radicals **R⁸, R⁹** and **R¹⁰** each independently have the definition hydrogen, halogen, silyloxy radical, or hydrocarbon radical, wherein individual carbon atoms in each case may be replaced by oxygen atoms, halogen, sulfur or phosphorus atoms and
**R¹¹** has the definition hydrogen or hydrocarbon radical, in which individual non-adjacent carbon atoms may be replaced by oxygen atoms, silicon, halogen, sulfur or phosphorus atoms,
wherein at least one of the radicals **R⁸, R⁹** and **R¹⁰** is a hydrogen or at least one of the radicals **R⁸, R⁹** and **R¹⁰** is a silyloxy radical, which comprises a hydrogen atom bonded directly to silicon.

6. Method or mixture **M** according to Claim 3, 4 or 5, wherein the silyloxy radical has general formula **II**
**(SiO_{4/2})ₐ(R^{x}SiO_{3/2})_{b}(R^{x}₂SiO_{2/2})_{c}(R^{x}₃SiO_{1/2})_{d}-** **(II)**
in which
**R^{x}** are each independently hydrogen, halogen, unbranched, branched, linear, acyclic or cyclic, saturated or mono- or polyunsaturated C1-C20 hydrocarbon radical or unbranched, branched, linear or cyclic, saturated or mono- or polyunsaturated C1-C20 hydrocarbooxy radical, wherein individual carbon atoms may be replaced by oxygen, halogen or sulfur and
**a, b, c** and **d** are each independently integer values from 0 to 100 000, wherein the sum total of **a, b, c** and **d** together has at least the value 1.

7. Method or mixture **M** according to Claim 6, wherein the sum total of **a+b+c+d** is from 4 to 20 000.

8. Method or mixture **M** according to Claim 1 to 7, wherein the radicals **R^{y}** are each independently hydrogen or C1-C20 hydrocarbon radicals.

9. Method or mixture **M** according to Claim 1 to 8, wherein **X⁻** is selected from BF₄⁻, ClO₄⁻, AlZ₄⁻, MF₆⁻ where **Z** = halogen and **M** = P, As or Sb, aryl borate anion, wherein the aryl radical is phenyl or fluorinated phenyl or phenyl substituted by perfluoroalkyl radicals, from monovalent polyhedral anion, alkoxy metallation and aryloxy metallation, tetrachlorometallates [MCl₄]⁻ where M = Al, Ga, tetrafluoroborates [BF₄]⁻, hexafluorometallates [MF₆]⁻ where M = As, Sb, Ir, Pt, perfluoroantimonates [Sb₂F₁₁]⁻, [Sb₃F₁₆]⁻ and [Sb₄F₂₁]⁻, triflate (= trifluoromethanesulfonate) [OSO₂CF₃]⁻, tetrakis(trifluoromethyl)borate [B(CF₃)₄]⁻, tris(pentafluorophenyl)hydridometallates [MH(C₆F₅)₃]⁻where M = B, Al, Ga, tetrakis(pentafluorophenyl)metallates [M(C₆F₅)₄]⁻where M = B, Al, Ga, tetrakis(pentachlorophenyl)borate [B(C₆Cl₅)₄]⁻, tetrakis[(2,4,6-trifluoromethyl(phenyl)]borate {B[C₆H₂(CF₃)₃]}⁻, [bis[tris(pentafluorophenyl)] hydroxide {HO[B(C₆F₅)₃]₂}⁻, *closo*-carborates [CHB₁₁H₅Cl₆]⁻, [CHB₁₁H₅Br₆]⁻, [CHB₁₁(CH₃)₅Br₆]⁻, [CHB₁₁F₁₁]⁻, [C(Et)B₁₁F₁₁]⁻, [CB₁₁(CF₃)₁₂]⁻ and B₁₂Cl₁₁N(CH₃)₃]⁻, tetra (perfluoroalkoxy) aluminates [Al(OR^{PF})₄]⁻, tris(perfluoroalkoxy)fluoroaluminates [FAl(OR^{PF})₃]⁻ and hexakis (oxypentafluorotellurium) antimonate [Sb(OTeF₅)₆]⁻.

10. Method or mixture **M** according to Claim 1 to 9, wherein additives **E** are present, that are not reactive to components **A, B, C** and **D**, which are selected from processing aids, fillers, adhesion promoters, stabilizers, pigments, plasticizers, organic polymers, heat stabilizers, inhibitors, biologically active ingredients and polyorganosiloxanes.

## Revendications

1. Procédé pour la préparation de siloxanes, dans lequel
un composé **A** est transformé avec un composé **B** ou
un composé **A** est transformé avec un composé **C** ou
un composé **B** est transformé avec un composé **C** ou
un composé **C** est transformé sans composé **A** et **B** en présence d'un composé **D** à au moins 40 °C,
le composé **A** étant un silane ou un siloxane, qui contient au moins un atome d'hydrogène lié directement au silicium,
le composé **B** étant un silane ou un siloxane, qui contient au moins un groupe alcoxy lié directement au silicium,
le composé **C** étant un silane ou un siloxane, qui contient au moins un atome d'hydrogène directement lié au silicium et au moins un groupe alcoxy directement lié au silicium et
le composé **D** étant un composé cationique de Si(II) de formule générale **V**
**([Si(II)Cp]⁺)ₐ X^{a-}** **(V)**,
dans laquelle
**Cp** est un radical cyclopentadiényle π-lié de formule générale **VI**, qui est substitué par les radicaux **R^{y}**, 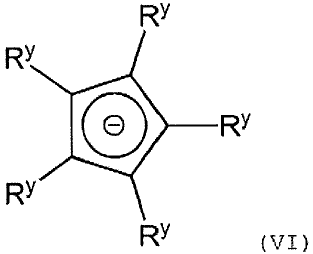
**R^{y}** sont des radicaux monovalents ou des radicaux polyvalents, qui peuvent être également liés l'un à l'autre pour la formation de cycles annelés
**X^{a-}** signifie un anion **a**-valent, qui ne réagit pas avec le centre de silicium(II) cationique dans les conditions de réaction, ou le composé **D** est choisi parmi les composés de Si(II) cationiques : 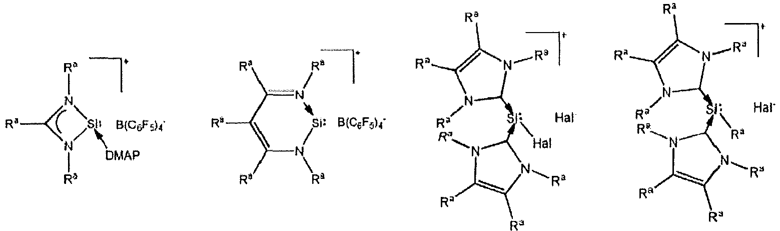
les radicaux **R^{a}** signifiant indépendamment les uns des autres des radicaux hydrocarbonés et **Hal** signifiant halogène.

2. Mélange **M**, contenant
(a) un composé **A** avec un composé **B** ou un composé **A** avec un composé **C** ou un composé **B** avec un composé **C** et
(b) un composé **D**,
les composés **A, B, C** et **D** étant décrits dans la revendication 1,
étant entendu que le composé **B** ne présente pas de groupe vinyle.

3. Procédé selon la revendication 1 ou mélange **M** selon la revendication 2,
le composé **A** présentant la formule générale I
**R¹R²R³Si-H** **(I)**,
les radicaux **R¹, R²** et **R³** possédant indépendamment les uns des autres la signification hydrogène, halogène, radical silyloxy ou radical hydrocarboné, à chaque fois des atomes de carbone individuels pouvant être remplacés par des atomes d'oxygène, des atomes d'halogène, de soufre ou de phosphore.

4. Procédé selon la revendication 1 ou 3 ou mélange **M** selon la revendication 2 ou 3, le composé **B** présentant la formule générale **III**
**R⁴R⁵R⁶Si-O-CH₂-R⁷** **(III)**
les radicaux **R⁴, R⁵** et **R⁶** possédant indépendamment les uns des autres la signification hydrogène, halogène, radical silyloxy ou radical hydrocarboné, à chaque fois des atomes de carbone individuels pouvant être remplacés par des atomes d'oxygène, des atomes d'halogène, de soufre ou de phosphore et
**R⁷** possédant la signification hydrogène ou radical hydrocarboné, dans lequel des atomes de carbone individuels non adjacents peuvent être remplacés par des atomes d'oxygène, des atomes de silicium, d'halogène, de soufre ou de phosphore.

5. Procédé selon la revendication 1, 3 ou 4 ou mélanges **M** selon la revendication 2, 3 ou 4, le composé **C** présentant la formule générale **IV**
**R⁸R⁹R¹⁰Si-O-CH₂-R¹¹** **(IV)**
les radicaux **R⁸, R⁹** et **R¹⁰** possédant indépendamment les uns des autres la signification hydrogène, halogène, radical silyloxy ou radical hydrocarboné, à chaque fois des atomes de carbone individuels pouvant être remplacés par des atomes d'oxygène, des atomes d'halogène, de soufre ou de phosphore et
**R¹¹** possédant la signification hydrogène ou radical hydrocarboné, dans lequel des atomes de carbone individuels non adjacents peuvent être remplacés par des atomes d'oxygène, des atomes de silicium, d'halogène, de soufre ou de phosphore,
au moins un des radicaux **R⁸, R⁹** et **R¹⁰** étant un hydrogène ou au moins un des radicaux **R³, R⁹** et **R¹⁰** étant un radical silyloxy, qui contient un atome d'hydrogène directement lié au silicium.

6. Procédé ou mélange **M** selon la revendication 3, 4 ou 5, le radical silyloxy présentant la formule générale **II**
**(SiO_{4/2})ₐ(R^{x}SiO_{3/2})_{b}(R^{x}₂SiO_{2/2})_{c}(R^{x}₃SiO_{1/2})_{d}-** **(II)**
**R^{x}** signifiant indépendamment les uns des autres hydrogène, halogène, un radical hydrocarboné non ramifié, ramifié, linéaire, acyclique ou cyclique, saturé ou monoinsaturé ou polyinsaturé en C₁₋₂₀ ou un radical hydrocarboxy non ramifié, ramifié, linéaire ou cyclique, saturé ou monoinsaturé ou polyinsaturé en C₁₋₂₀, des atomes de carbone individuels pouvant être remplacés par oxygène, halogène ou soufre et
**a, b, c** et **d,** indépendamment les uns des autres, signifiant des valeurs entières de 0 à 100 000, la somme de **a, b, c** et **d** ensemble prenant au moins la valeur 1.

7. Procédé ou mélange **M** selon la revendication 6, la somme **a + b + c + d** étant de 4 à 20 000.

8. Procédé ou mélange **M** selon les revendications 1 à 7, les radicaux **R^{y}** signifiant indépendamment les uns des autres hydrogène ou des radicaux hydrocarbonés en C₁₋₂₀.

9. Procédé ou mélange **M** selon les revendications 1 à 8, **X⁻** étant choisi parmi BF₄⁻, ClO₄⁻, AlZ₄⁻, MF₆⁻avec **Z** = halogène et **M** = P, As ou Sb, anion arylborate, le radical aryle signifiant phényle ou phényle fluoré ou phényle substitué par des radicaux perfluoroalkyle, parmi un anion monovalent polyédrique, un anion alcoxymétallate et aryloxymétallate, les tétrachlorométallates [MCl₄]⁻ avec M = Al, Ga, les tétrafluoroborates [BF₄]⁻, les hexafluorométallates [MF₆]⁻ avec M = As, Sb, Ir, Pt, les perfluoroantimonates [Sb₂F₁₁]⁻, [Sb₃F₁₆]⁻ et [Sb₄F₂₁]⁻, triflate (= trifluorométhanesulfonate) [OSO₂CF₃]⁻, tétrakis(trifluorométhyl)borate [B(CF₃)₄]⁻, les tris(pentafluorophényl)hydridométallates [MH(C₆F₅)₃]⁻ avec M = B, Al, Ga, les tétrakis(pentafluorophényl)métallates [M(C₆F₅)₄]⁻ avec M = B, Al, Ga, tétrakis(pentachlorophényl)borate [B(C₆Cl₅)₄]⁻, tétrakis[(2,4,6-trifluorométhyl(phényl)]borate {B[C₆H₂(CF₃)₃]}⁻, [bis[tris(pentafluorophényl)] hydroxyde {HO[B(C₆F₅)₃]₂}⁻, les closo-carborates [CHB₁₁H₅Cl₆]⁻, [CHB₁₁H₅Br₆]⁻, [CHB₁₁(CH₃)₅Br₆]⁻, [CHB₁₁F₁₁]⁻, [C(Et)B₁₁F₁₁]⁻, [CB₁₁(CF₃)₁₂]⁻ et B₁₂Cl₁₁N(CH₃)₃]⁻, les tétra(perfluoroalcoxy)aluminates [Al(OR^{PF})₄]⁻, les tris(perfluoroalcoxy)fluoroaluminates [FAl(OR^{PF})₃]⁻ et hexakis(oxypentafluorotellure)antimonate [Sb(OTeF₅)₆]⁻.

10. Procédé ou mélange **M** selon la revendication 1 à 9, des additifs **E** non réactifs avec les composants **A, B, C** et **D** étant présents, qui sont choisis parmi des auxiliaires de procédé, des charges, des promoteurs d'adhérence, des stabilisants, des pigments, des assouplissants, des polymères organiques, des stabilisants à la chaleur, des inhibiteurs, des principes actifs biologiques et des polyorganosiloxanes.
